# EUROPÄISCHE PATENTSCHRIFT

(11) **EP 3 130 447 B1**
(45) Veröffentlichungstag und Bekanntmachung des Hinweises auf die Patenterteilung: **06.02.2019**
(21) Anmeldenummer: 16181166.6
(22) Anmeldetag: 26.07.2016
(51) Int. Cl.: B29C 65/02, B29C 65/00, B65B 31/02, B65B 51/10, B65B 51/14

(54) **VAKUUMSCHUBLADE MIT SCHWEISSBALKEN**
VACUUM DRAWER WITH WELDING BEAM
TIROIR A VIDE AVEC BARRE DE SOUDURE

(30) Priorität: 11.08.2015 DE 102015010432
(43) Veröffentlichungstag der Anmeldung: 15.02.2017
(73) Patentinhaber: MICHATEK, k.s., 07101 Michalovce (SK)
(72) Erfinder: Bocks, Stefan, 83112 Frasdorf (DE); Harlander, Florian, 6342 Niederndorf (AT); Kopfensteiner, Peter, 6341 Ebbs (AT)
(74) Vertreter: Zinnecker, Armin

(56) Entgegenhaltungen:
- EP-A1- 1 149 768
- EP-A1- 2 862 807
- DE-A1-102012 003 111
- GB-A- 778 777
- JP-U- H0 561 006

## Beschreibung

Die Erfindung betrifft eine Vakuumschublade zum Vakuumieren von Lebensmitteln, die eine Vakuumkammer mit einem Schweißbalken umfasst.

Vakuumiergeräte umfassen eine Vakuumkammer, in die ein geeignetes Behältnis, beispielsweise in Form eines versiegelbaren Beutels, eingelegt wird. Innerhalb der Kammer erstreckt sich ein länglicher Schweißbalken, der quer zur Vakuumkammer montiert ist. Der Schweißbalken ist in vertikaler Richtung höhenverstellbar. Ein mit Lebensmitteln befülltes Behältnis wird in die Vakuumkammer eingelegt, diese im Anschluss über einen Deckel luftdicht verschlossen, um mittels einer Vakuumpumpe ein Kammervakuum zu erzeugen. Da der Schweißbalken zunächst in geöffneter Stellung positioniert ist, kann auch die Luft aus dem Behältnis abgesaugt werden. Im Anschluss wird der Schweißbalken höhenverstellt und der Beutel zwischen Schweißbalken und Gegenstelle eingeklemmt. Dem integrierten Schweiß- bzw. Schweißdraht des Schweißbalkens wird die notwendige Schweißenergie zugeführt, sodass der oftmals kunststoffhaltige Beutel aufgrund der Hitzeentwicklung luftdicht versiegelt wird.

Auf der Oberseite des Schweißbalkens, auf die der zu verschweißende Beutel gelegt wird, ist üblicherweise eine wärmeleitende Antihaftbeschichtung aufgetragen, die die Wärmeentwicklung des darunter liegenden Schweißdrahtes an den unmittelbar auf der Beschichtung aufliegenden Beutel überträgt. Die Beschichtung ist üblicherweise eine geeignete Folie, die auf die Oberfläche des einteiligen Schweißbalkenkonstruktes aufgeklebt ist. Die ständige Hitzeentwicklung während des Schweißvorgangs führt über kurz oder lang zu optischen Verschleißerscheinungen des Antihaftbandes, was sich durch störende Verfärbungen auszeichnet. Neben den optischen Makeln kann dadurch auch die Antihaft- sowie Wärmeleitfunktion des Bandes beeinträchtigt werden. Aus diesem Grund sollte die Antihaftbeschichtung von Zeit zu Zeit erneuert werden. Aufgrund der Verklebung ist ein einzelner Folienaustausch kaum möglich, weshalb der Einfachheit halber der gesamte Schweißbalken gewechselt wird. Die durch den Kompletttausch bedingt hohen Reparaturkosten sind jedoch unerwünscht.

Aus der Schrift EP 1 149 768 A1 ist ein Vakuumiergerät mit einem Schweißbalken bekannt, dessen Schweißbalken mit einer PTFE-Folie abgedeckt ist. Die streifenförmige PTFE-Folie ist an ihren Enden an zapfenförmigen Haken eingehängt, die an der Oberfläche des den Schweißbalken umgebenden Rahmens vorspringen. Aus der GB 778 777 B ist ein Folienschweißgerät bekannt, dessen balkenförmige Elektrode mit einer Antihaftfolie umhüllt ist, die direkt gegen die Elektrode gespannt ist. Ferner zeigt die EP 2 862 807 eine Vakuumschublade für Küchenmöbel, in der ein Schweißbalken zum Verschweißen eines Vakuumbeutels vorgesehen ist. Die JP H05-61006 A zeigt einen Schweißbalken, bei dem ein Antihaftband um den Schweißdraht umgeschlagen und mittels eines Klemmrahmens festgeklemmt wird.

Die Aufgabe der vorliegenden Erfindung besteht darin, eine Neukonstruktion des Schweißbalkens zu schaffen, der einen günstigeren Austausch der Antihaftbeschichtung zulässt.

Gelöst wird diese Aufgabe durch eine Vakuumschublade zum Vakuumieren von Lebensmitteln gemäß den Merkmalen des Anspruchs 1.

Vorteilhafte Ausgestaltungen sind Gegenstand der abhängigen Unteransprüche.

Der Schweißbalken besteht aus einem Grundträger, der den notwendigen Schweißdraht umfasst, sowie einem Rahmenteil mit integrierter Antihaftbeschichtung, wobei Rahmenteil und Grundträger lösbar miteinander verbindbar bzw. verbunden sind. Der Schweißbalken ist demnach zweiteilig ausgestaltet, sodass dieser nicht vollständig getauscht werden muss, sondern zur Erneuerung der Antihaftbeschichtung lediglich das Rahmenteil inklusive Beschichtung getauscht werden muss. Zum Austausch des Rahmenteils wird der vollständige Schweißbalken aus der Vakuumschublade entnommen und das Rahmenteil vom Grundträger zum Austausch gelöst. Idealerweise ist der Grundträger mit dem Rahmenteil lösbar verrastet. Der Tausch ist damit nicht nur einfacher, sondern ebenfalls kostengünstiger. Die Beschichtung kann vorzugsweise durch ein Antihaftband realisiert sein, dass bei lösbarer Befestigung am Rahmenteil auch separat getauscht werden kann. Dadurch sinken die Reparaturkosten weiter.

Die Antihaftbeschichtung ist neben der antihaftenden Eigenschaft auch thermisch leitend, insbesondere besteht diese aus thermisch leitendem Material. Gemäß einer bevorzugten Ausführungsform ist das Antihaftband ein Teflonband. Das Antihaftband verläuft vorzugsweise parallel zum Schweißdraht, d.h. der Schweißdraht ist durch das Antihaftband überdeckt, um den direkten Kontakt zwischen Schweißdraht und zu versiegelndem Beutel zu verhindern. Das Antihaftband gibt die Hitzeentwicklung des Schweißdrahtes gut an den zu versiegelnden Beutel weiter, aufgrund der Materialzusammensetzung des Antihaftbandes wird dennoch ein Verkleben des Beutels am Schweißbalken verhindert.

Das Rahmenteil zur Aufnahme des Antihaftbandes weist auf seiner Oberseite eine in Längsrichtung durchgehende Öffnung auf, die durch das Antihaftband zumindest teilweise, idealerweise nahezu vollständig verdeckt ist. Die Oberseite des Rahmenteils entspricht der Oberfläche des Schweißbalkens, auf die der Beutel zum Versiegeln aufgelegt wird.

Dabei ist das Antihaftband breiter als die Öffnung des Rahmenteils. In diesem Fall sind die Längskanten des Antihaftbandes nach unten gebogen bzw. gefaltet und ragen in die Öffnung des Rahmenteils in das Innere des Schweißbalkens hinein. Das Antihaftband ist mittels der gefalteten Längskanten im Inneren des Schweißbalkens fixiert.

Zwischen Öffnungskante und Antihaftband entsteht unter Umständen eine Schmutzkante, die bei entsprechender Verschmutzung zu einem optischen Makel führt. Zur Vermeidung der Schmutzkante wird wenigstens eine Öffnungskante des Rahmenteils, zumindest eine Längskante der Öffnung, mit einer Dichtlippe versehen. Durch die Dichtlippe kommt es zu einem "fließenden" Übergang zwischen Rahmenteil und Antihaftband, wodurch der Absatz zwischen Rahmenteil und Antihaftband deutlich minimiert wird. Es kommt zu einer verringert Schmutzbildung am Übergang.

Erfindungsgemäß bildet die Faltung der Längskanten des Antihaftbandes ein gebogenes, stufenartiges Profil, das sich passgenau an die Form der Dichtlippe anlegt bzw. zumindest teilweise um die Dichtlippe verläuft.
Vorzugsweise ist das Antihaftband am Rahmenteil und/oder Grundträger fixiert. Die Verbindung kann lösbar, beispielsweise mittels Klemmung zwischen Grundträger und Rahmenteil, oder fest durch Verklebung sein. Die Verklebung mit dem Rahmenteil ist zumindest punktuell aufgebracht. Denkbar ist auch eine Kombination aus klemmender als auch klebender Verbindung.

Weitere Vorteile und Einzelheiten der Erfindung sollen im nachfolgenden Teil anhand des in den Figuren dargestellten Ausführungsbeispiels näher beschrieben werden. Es zeigen:
- Figuren 1a, 1b:: zwei isometrische Darstellungen der erfindungsgemäßen Vakuumschublade,
- Figur 2:: eine perspektivische Ansicht des Rahmenteils des Schweißbalkens,
- Figur 3:: das Rahmenteil gemäß Figur 2 in einer Explosionsdarstellung,
- Figur 4:: eine Schnittdarstellung des Schweißbalkens quer zu dessen Längsachse,
- Figur 5a:: eine Schnittdarstellung des Grundträgers entlang der Längsachse,
- Figur 5b:: eine Detailansicht der Darstellung gemäß Figur 5a und
- Figur 6:: eine Explosionsdarstellung des Grundträgers des Schweißbalkens.

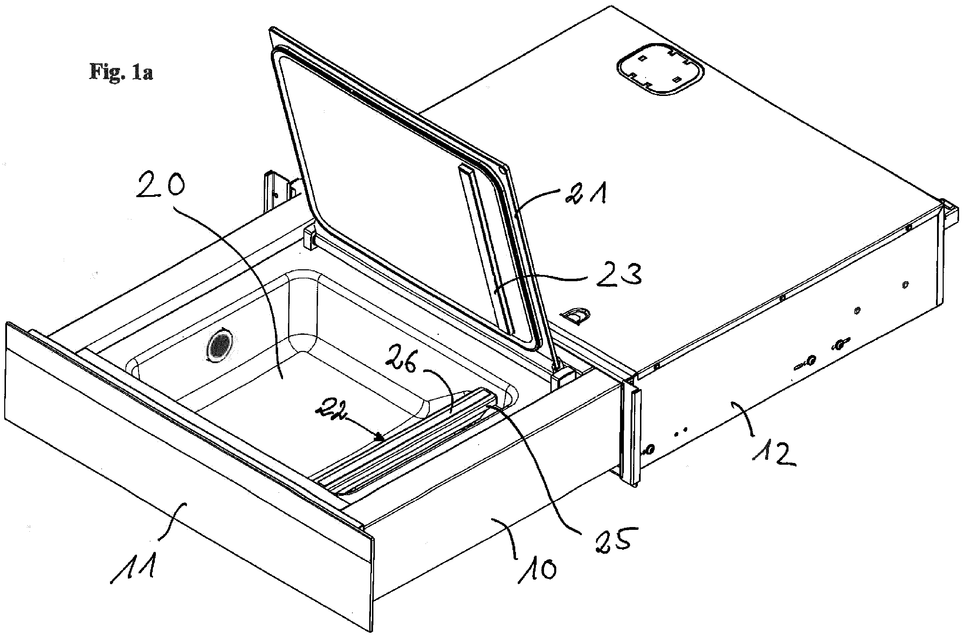

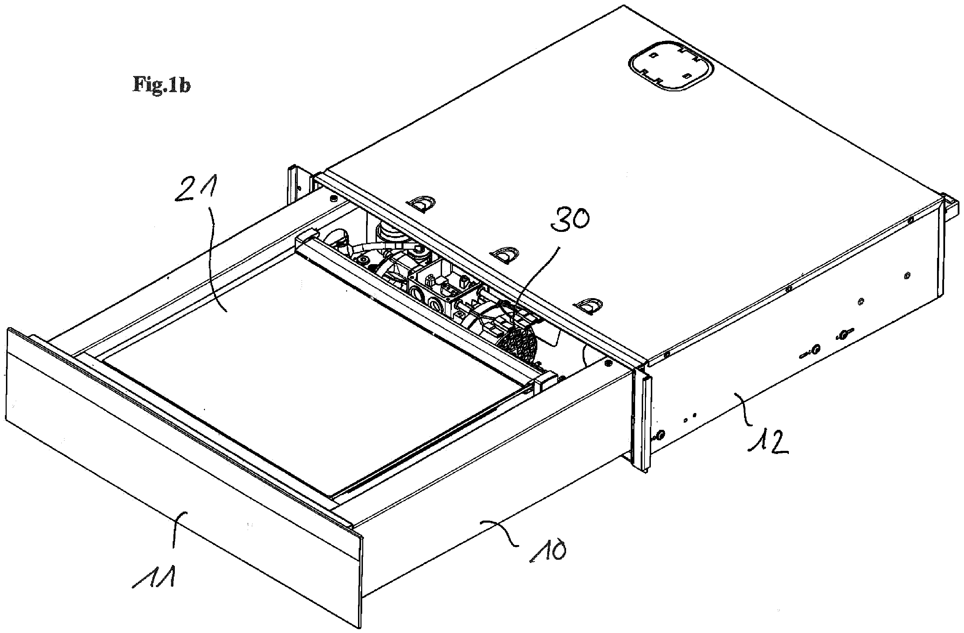

Die zwei Figuren 1a, 1b zeigen isometrische Darstellungen der erfindungsgemäßen Vakuumschublade. Die Darstellung der Figur 1a zeigt die ausgefahrene Schublade für den regulären Vakuumierbetrieb. In Figur 1b ist die Schublade zu Wartungszwecken noch ein Stück weiter ausgefahren, um einen Blick auf die Vakuumpumpe 30 zu ermöglichen. Die Schublade eignet sich für den Einsatz in einem Küchenmöbel, da sie sich durch eine Einbauhöhe von ca. 140 mm auszeichnet und demnach dem Normmaß von Einbauküchen entspricht.

Die Vakuumschublade umfasst einen Schubladenauszug 10, der in einem Schubladenkorpus 12 über seitliche Führungsschienen längsverschieblich geführt ist. Im dargestellten Ausführungsbeispiel ist die Frontabdeckung 11 grifflos, der Schubladenauszug ist als Push-Pull-Einrichtung zum Öffnen und Schließen konstruiert. Innerhalb des Schubladenauszuges ist eine Vakuumkammer 20 gelagert, die mit einer Vakuumpumpe 30 der Vakuumschublade strömungstechnisch gekoppelt ist, um die Luft aus der verschlossenen Vakuumkammer 20 abzupumpen. Die Vakuumkammer 20 kann über den schwenkbar an der Kammer 20 montierten Deckel 21 luftdicht verschlossen werden. Der Deckel 21 selbst kann aus Designgründen aus Glas gefertigt sein.

Für das Versiegeln eines eingelegten Beutels dient ein Schweißbalken 22, der sich im Kammerinneren in Auszugsrichtung der Schublade erstreckt. Ein mit Lebensmitteln befüllter Beutel wird zum Vakuumieren in die Kammer 20 eingelegt und der Deckel 21 luftdicht verschlossen. Nach dem Auspumpen der Kammer 20 mittels der in Figur 1b sichtbaren Vakuumpumpe 30 kann der Beutel mittels des Schweißbalkens 22 versiegelt werden. Dazu wird die zu versiegelnde Beutelöffnung auf dem Schweißbalken 22 abgelegt, der diesen nach dem Vakuumieren gegen eine Andruckstelle drückt und durch Hitzeeinwirkung versiegelt. Der Balken 22 kann entweder an einen am Deckel 21 befestigten Gegendruckbalken 23 oder gegen eine alternative Anpressfläche gepresst werden. Die Vakuumpumpe 30 sitzt hinter der Kammer 20 am hinteren Teil des Schubladenauszuges 10 und ist mit der Vakuumkammer 20 strömungstechnisch gekoppelt, um zur Vakuumerzeugung die Luft aus der Kammer 20 abzupumpen.

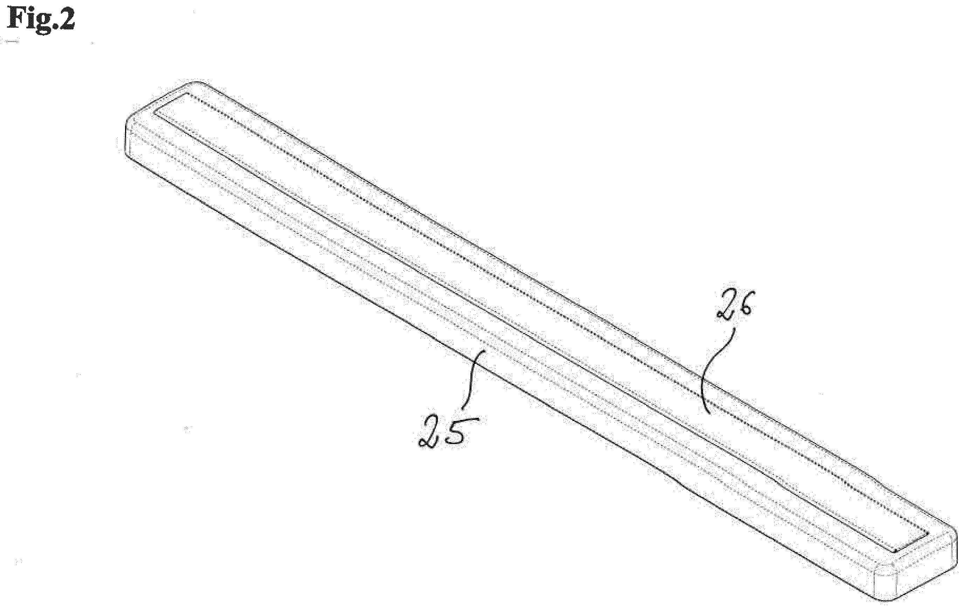

Der Schweißbalken 22 umfasst einen Grundkörper 40 sowie ein Rahmenteil 25, das mit einem Teflonband 26 ausgestattet ist. Beim Schweißvorgang kontaktiert der Schweißbalken 22 über das Teflonband 26 den eingelegten Beutel, die vom Schweißdraht 42 erzeugte Hitze wird über das Teflonband 26 an den Beutel abgegeben. Figur 2 zeigt eine perspektivische Darstellung des Rahmenteils 25 für den erfindungsgemäßen Schweißbalken 22. Das Rahmenteil 25 umfasst das Teflonband 26, das sich in Längsrichtung des Schweißbalkens 22 fast vollständig über dessen Oberfläche erstreckt.

Die zweiteilige Konstruktion des Schweißbalkens 22 bestehend aus dem Grundkörper 40 und dem Rahmenteil 25 erlaubt einen schnellen, einfachen und kostengünstigen Austausch des Teflonbandes 26. Es kann entweder das gesamte Rahmenteil 25 oder nur das Teflonband 26 getauscht werden.

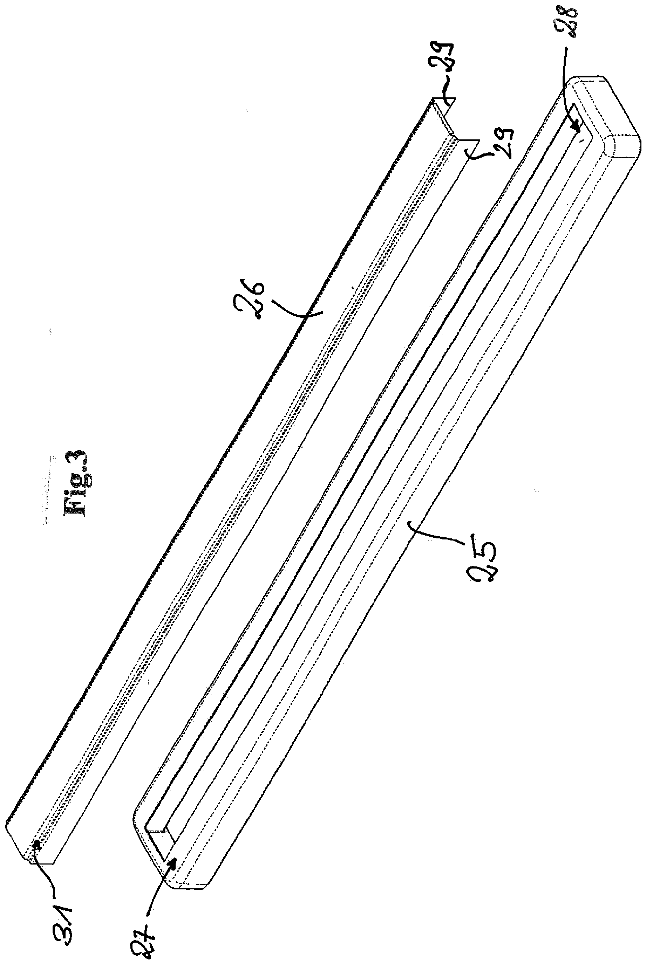

Die Explosionsdarstellung gemäß Figur 3 zeigt das vollständige Teflonband 26 sowie die Beschaffenheit der Oberfläche des Rahmenteils 25. Das Rahmenteil 25 umfasst auf seiner Oberfläche 27, auf die während des Schweißvorgangs ein entsprechend zu versiegelnder Beutel aufgelegt wird, eine Ausnehmung 28. Die Längskanten 29 des Teflonbandes 26 sind nach unten gefaltet, die resultierende Breite des Teflonbandes 26 entspricht damit in etwa der Öffnungsbreite der Ausnehmung 28. Dadurch lässt sich das Teflonband 26 in die Öffnung 28 einsetzen und es ergibt sich eine nahezu stufenlose Oberfläche 27 des Rahmens 25 mit einem äußert geringen Versatz am Übergang zwischen Rahmenteil 25 und Teflonband 26.

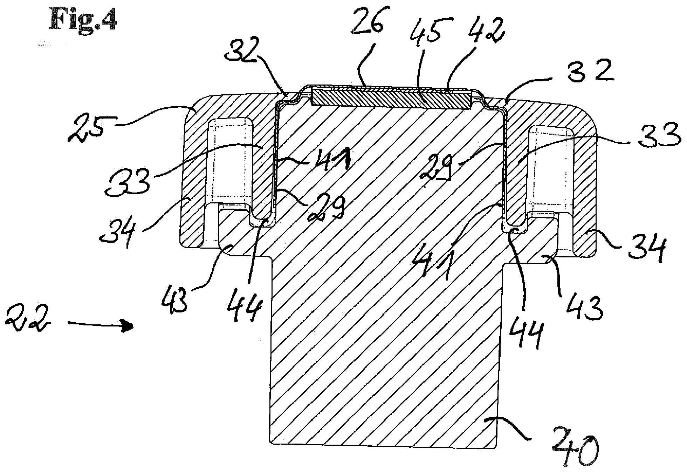

Die Faltkante 31 des Teflonbandes 26 ist jedoch keine einfache Kantung, sondern die Faltung bildet ein gebogenes stufenförmiges Profil 31. Der genaue Profilverlauf ist der Querschnittsdarstellung gemäß Figur 4 zu entnehmen. Durch die gewählte Profilform 31 kann sich das Teflonband 26 eng an die beiden Dichtlippen 32 des Rahmenteils 25 anlegen, die sich jeweils entlang der Längskanten der Öffnung 28 erstrecken. Die Dichtlippen 32 reduzieren den Versatz im Übergang zwischen Rahmenteil 25 und Teflonband 26, so dass die Gefahr zur Schmutzbildung am Übergang minimiert wird.

Der Figur 4 ist weiterhin zu entnehmen, dass das Rahmenteil 25 auf den Grundträger 40 des Schweißbalkens 22 von oben aufgesteckt wird. Im Bereich der Öffnungskanten der Öffnung 28 des Rahmenteils 25 ragt eine Innenwandung 33 nach innen bzw. nach unten in den Schweißbalken 22 hinein, wodurch eine Öffnungswandung gebildet wird. Diese Innenwand 33 verläuft parallel zur gegenüberliegenden Seitenwand 41 des Grundträgers 40. Die Innenwandung 33 verläuft zudem parallel zur jeweiligen Außenwand 34 des Rahmenteils 25. Zwischen Innenwand 33 und Außenwand 34 liegt ein Spalt.

Auf der Oberfläche 45 des Grundträgers 40 verläuft in Längsrichtung der Schweißdraht 42. Wird das Rahmenteil 25 von oben auf den Grundträger 40 aufgesetzt, dann liegt der Schweißdraht 42 unmittelbar unterhalb des Teflonbandes 26, wodurch sich eine optimale Wärmeübertragung ergibt. Das Teflonband 26 kann durch eine Klemmverbindung am Schweißbalken 22 fixiert sein. Hierzu sind die gefalteten Längskanten 29 zwischen der Seitenwandung 41 des Grundträgers 40 und der Innenwandung 33 des Rahmenteils 25 geklemmt. Ebenfalls erfolgt eine dichtende Klemmung im Bereich der Dichtlippen 32 mit der Oberfläche des Grundträgers 40. Das Teflonband 26 kann zudem mit dem Rahmenteil 25 zusätzlich verklebt sein oder anderweitig an diesem befestigt sein.

Beim Aufsetzen des Rahmenteils 25 auf den Grundträger 40 wird die Unterkante der Innenwandung 33 endseitig in die durch die Auskragung 43 gebildete Nut 44 des Grundträgers 40 eingeklickt.

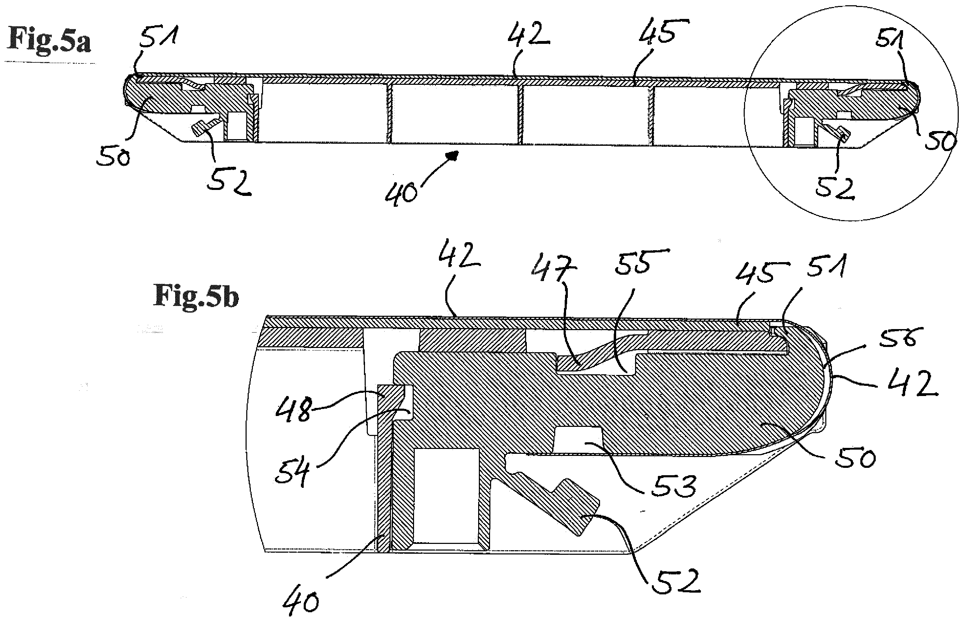

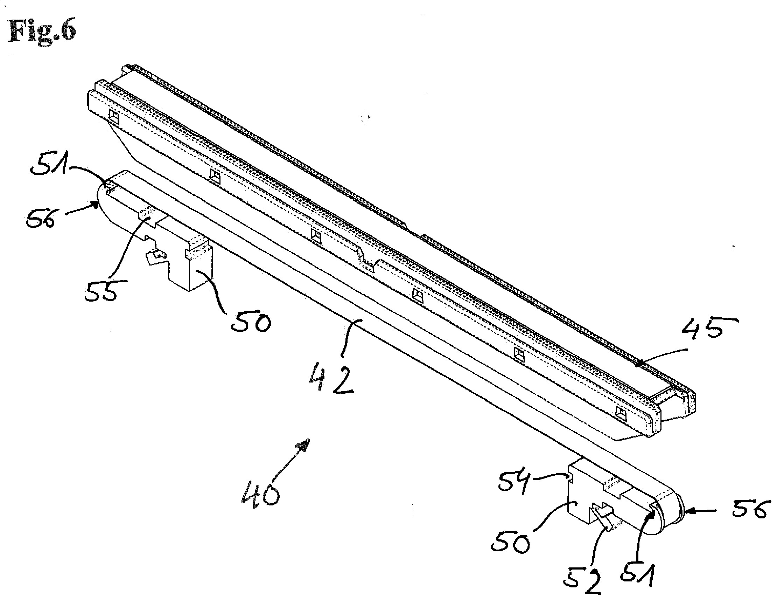

Die Befestigung des Schweißdrahtes 42 auf dem Grundträger 40 soll im Folgenden anhand der Figuren 5a, 5b und 6 näher erläutert werden. Figur 6 zeigt eine Explosionsdarstellung des Grundträgers 40, während Figur 5a einen Längsschnitt durch den Grundträger 40 zeigt. Figur 5b stellt einen Detailausschnitt der rechten Seite des Grundträgers 40 gemäß Figur 5a dar.

Der Schweißdraht 40 ist über die gesamte Oberfläche 45 des Grundträgers 40 in Längsrichtung gespannt, wobei die freien Schweißdrahtenden über die Endkanten des Grundträgers 40 auf dessen Unterseite geführt sind. Die Fixierung des Schweißdrahtes 42 am Grundträger 40 wird mit Klemmmitteln 50 erreicht. Diese sind aus einem elektrisch leitenden Material gefertigt und stellen gleichzeitig die Anschlussstellen des Schweißbalkens 22 für die elektrische Versorgung bereit.

Auf der Oberseite der Klemmmittel 50 befindet sich ein Haken 51, der durch die gerundete Endkante 56 des Klemmmittels 50 gebildet wird. An der Unterseite des Klemmmittels 50 befindet sich eine Nut 53 sowie ein biegsam am Klemmmittel befestigter Pflock 52, der passgenau in die Nut 53 eingepresst werden kann. An der Oberseite des Klemmmittels 50 befindet sich eine Ausnehmung 55, eine weitere Ausnehmung 54 existiert an der Rückseite des Klemmmittels 50. Die freien Enden des Schweißdrahtes 42 werden über jeweils eine gerundete Endseite 56 der Klemmmittel 50 von der Oberseite nach unten über die Nut 53 gelegt und durch Eindrücken des Pflockes 52 in die Nut 53 klemmend am Klemmmittel 50 fixiert.

Im Anschluss können die beiden Klemmmittel über die Haken 51 endseitig am Grundträger 40 eingehängt werden. Bevorzugt werden die Haken von oben am Grundträger eingehängt und im Anschluss durch eine Drehbewegung nach innen unter die Unterseite des Grundträgers gedrückt. Durch die damit verbundene Hebelwirkung kommt es zu einer ausreichenden Spannung des Schweißdrahtes, so dass dieser gleichmäßig und eben auf der Oberseite 45 des Grundträgers 40 verläuft. Die Vorspannung ist so gewählt, dass auch bei einer wärmebedingten Längung des Schweißdrahtes 42 eine gleichmäßige Kontaktierung stattfindet. In dieser Position werden die Klemmmittel 50 zudem über die Ausnehmungen 54, 55 an den entsprechenden Rasthaken 47, 48 des Grundträgers 40 verrastet. Erwähnenswert ist noch, dass sich die Klemmmittel 50 in der fixierten Lage geschützt in einem Hohlraum der Klemmkörper 50 befinden.

## Patentansprüche

1. Vakuumschublade zum Vakuumieren von Lebensmitteln für den Einbau in ein Möbelstück, mit einer Vakuumkammer (20) und wenigstens einem in der Vakuumkammer (20) gelagerten Schweißbalken (22) mit einem Grundträger (40) wenigstens einen Schweißdraht (42) umfassend sowie einem Rahmenteil (25) mit integriertem Antihaftband (26), wobei das Rahmenteil (25) lösbar am Grundträger (40) befestigbar ist und auf der einem zu verschweißenden Beutel zugewandten Seite eine in Längsrichtung durchgehende Öffnung (28) aufweist, die durch das Antihaftband (26) abgedeckt ist, wobei das Antihaftband (26) breiter als die Öffnung (28) des Rahmenteils (25) ist und eine Oberseite (27) des Rahmenteils (25) eine Oberfläche des Schweißbalkens bildet, auf der der zu verschweißende Beutel auflegbar ist, wobei die Längskanten (29) des Antihaftbandes (26) nach unten gefaltet sind und in die Öffnung des Rahmenteils (25) hineinragen, sich zwischen Rahmenteil (25) und Grundkörper (40) erstrecken und im Inneren des Schweißbalkens befestigt sind, **dadurch gekennzeichnet, dass** die Faltung der jeweiligen Längskante (29) des Antihaftbandes (26) ein gebogenes, stufenförmiges Profil bildet, das sich passgenau an die Form einer Dichtlippe (32) anlegt, die sich entlang der Längskante der Öffnung (28) des Rahmenteils (25) erstreckt.

2. Vakuumschublade nach Anspruch 1, **dadurch gekennzeichnet, dass** das Antihaftband ein Teflonband ist.

3. Vakuumschublade nach einem der vorhergehenden Ansprüche, **dadurch gekennzeichnet, dass** der Schweißdraht (42) des Grundträgers (40) bei montiertem Rahmenteil (25) unmittelbar unterhalb des Antihaftbandes (26) verläuft.

4. Vakuumschublade nach einem der vorhergehenden Ansprüche, **dadurch gekennzeichnet, dass** das Antihaftband (26) am Rahmenteil (25) und/oder Grundträger (40) fixiert ist, vorzugsweise zumindest punktuell verklebt ist.

5. Vakuumschublade nach einem der vorhergehenden Ansprüche, **dadurch gekennzeichnet, dass** das Antihaftband (26) durch eine klemmende Verbindung zwischen Rahmenteil (25) und Grundträger (40) am Schweißbalken fixiert ist.

6. Vakuumschublade nach einem der vorhergehenden Ansprüche, **dadurch gekennzeichnet, dass** die lösbare Verbindung zwischen Grundträger (40) und Rahmenteil (25) durch eine Verrastung erfolgt.

## Claims

1. A vacuum drawer for the vacuuming-sealing of food, for installation in a piece of furniture, having a vacuum chamber (20) and at least one sealing bar (22) supported in the vacuum chamber (20) with a base support (40) comprising at least one welding wire (42) as well as having a frame part (25) with an integrated non-stick tape (26), wherein the frame part (25) is releasably fastenable to the base support (40) and has an opening (28) on the side facing a bag to be sealed which is continuous in the longitudinal direction and which is covered by the non-stick tape (26), wherein the non-stick tape (26) has a greater width than the opening (28) of the frame part (25) and an upper side (27) of the frame part (25) forms a surface of the sealing bar onto which the bag to be sealed can be placed, wherein the longitudinal edges (29) of the non-stick tape (26) are folded downwardly and project into the opening of the frame part (25), extend between the frame part (25) and the base body (40) and are fastened inside the sealing bar, **characterized in that** the folding of the respective longitudinal edge (29) of the anti-stick tape (26) forms a bent, stepped profile, which adapts acurately-fitting to the shape of a sealing lip (32) which extends along the longitudinal edge of the opening (28) of the frame part (25).

2. The vacuum drawer in accordance with claim 1, **characterized in that** the non-stick tape is a Teflon tape.

3. The vaccum drawer in accordance with any of the preceding claims, **characterized in that** the welding wire (42) of the base support (40) extends directly below the non-stick tape (26) with an installed frame part (25).

4. The vacuum drawer in accordance with any of the preceding claims, **characterized in that** the non-stick tape (26) is fixed, is preferably adhesively bonded at least at points, at the frame part (25) and/or at the base support (40).

5. The vacuum drawer in accordance with any of the preceding claims, **characterized in that** the non-stick tape (26) is fixed to the sealing bar by a clamping connection between the frame part (25) and the base support (40).

6. The vacuum drawer in accordance with any of the preceding claims, **characterized in that** the releasable connection between the base support (40) and the frame part (25) takes place by latching.

## Revendications

1. Tiroir à vide pour mettre des produits alimentaires sous vide, destiné à être monté dans un meuble, comprenant une chambre à vide (20) et au moins une barre de soudure (22) logée dans la chambre à vide (20) et dotée d'un support de base (40) comprenant au moins un fil de soudage (42) ainsi que d'une partie de cadre (25) dotée d'une bande antiadhésive (26) intégrée, la partie de cadre (25) pouvant être fixée de manière détachable au support de base (40) et présentant une ouverture (28) traversante dans le sens longitudinal sur le côté orienté vers le sac à souder, qui est recouverte par la bande antiadhésive (26), la bande antiadhésive (26) étant plus large que l'ouverture (28) de la partie de cadre (25) et une face supérieure (27) de la partie de cadre (25) formant une surface supérieure de la barre de soudure, sur laquelle le sac à souder peut être posé, les bords longitudinaux (29) de la bande antiadhésive (26) étant pliés vers le bas et dépassant dans l'ouverture de la partie de cadre (25), s'étendant entre la partie de cadre (25) et le corps de base (40) et étant fixés à l'intérieur de la barre de soudure, **caractérisé en ce que** la pliure du bord longitudinal (29) respectif de la bande antiadhésive (26) forme un profil courbé en forme de marche, qui s'ajuste parfaitement à la forme d'une lèvre d'étanchéité (32), qui s'étend le long du bord longitudinal de l'ouverture (28) de la partie de cadre (25).

2. Tiroir à vide selon la revendication 1, **caractérisé en ce que** la bande antiadhésive est une bande en téflon.

3. Tiroir à vide selon l'une des revendications précédentes, **caractérisé en ce que** le fil de soudage (42) du support de base (40) s'étend directement sous la bande antiadhésive (26) lorsque la partie de cadre (25) est montée.

4. Tiroir à vide selon l'une des revendications précédentes, **caractérisé en ce que** la bande antiadhésive (26) est fixée, de préférence au moins ponctuellement collée, sur la partie de cadre (25) et/ou le support de base (40).

5. Tiroir à vide selon l'une des revendications précédentes, **caractérisé en ce que** la bande antiadhésive (26) est fixée sur la barre de soudure par une liaison par serrage entre la partie de cadre (25) et le support de base (40).

6. Tiroir à vide selon l'une des revendications précédentes, **caractérisé en ce que** la liaison libérable entre le support de base (40) et la partie de cadre (25) est effectuée par un enclenchement.
